# EUROPEAN PATENT APPLICATION

(11) **EP 4 603 993 A2**
(43) Date of publication of application: **20.08.2025**
(21) Application number: 25157869.6
(22) Date of filing: 14.02.2025
(51) Int. Cl.: G06F 21/30, G06F 21/31, G06F 21/32, G06F 21/52, H04L 9/40

(54) **USER AUTHENTICATION SYSTEMS AND METHODS OF USE THEREOF**

(30) Priority: 14.02.2024 US 202418441492
(71) Applicant: VALIDVOICE, LLC, Omaha, NE 68154 (US)
(72) Inventor: DE ROZAIRO, Damian, Omaha, 68154 (US)
(74) Representative: Schiweck Weinzierl Koch Patentanwälte Partnerschaft mbB

(57) **Abstract**

System and methods for authenticating a user requesting access to a secure system. An example system includes an access point, an authentication data gathering point, a comparison point, and an output of whether a user should be granted or denied access. Authentication data includes behavioral and biometric data collected from a user.

## Description

### CROSS-REFERENCE TO RELATED APPLICATIONS

This application claim priority to US application 18/441,492 which is a continuation-in-part of United States Patent Application No. 17/262,634, filed January 22, 2021, which is the United States National Phase Application of International Patent Application No. PCT/US2019/042939, filed July 23, 2019, which claims priority to United States Provisional Application No. 62/702,452, filed July 24, 2018, each of which are incorporated by reference in their entirety herein.

### TECHNICAL FIELD OF INVENTION

This invention generally relates to systems and methods for authenticating users of and providing security to devices.

### BACKGROUND OF THE INVENTION

The present disclosure is generally related to systems and methods used to verify a user's identity and grant access to a secured system. More specifically, the present invention relates to systems and methods for granting physical and/or logical access to secured systems including physical facilities and/or computer systems. Even more specifically, the present invention relates to systems and methods utilizing a biometric parameter which includes voice recognition to grant access.

Prior systems and methods for utilizing voice recognition have relied upon predetermined pass phrases to be spoken into a device with the entry of a personal identification number, username, or other designation of the user. The device may record and transmit the spoken passphrase to an engine for comparing it to a reference for the individual associated with the reference file. If the transmitted passphrase and reference file match to a sufficient degree, access would be granted to the person entering the user designation and providing the passphrase.

However, such systems include inherent security weaknesses. For example, the use of a static passphrase can make the system susceptible to spoofing by means of prerecorded audio of a user speaking the passphrase. Additionally, while a user designation may be required, the entry of such a designation only serves to verify the person attempting entry has the designation, not that they are, in fact, the user associated with the user designation.

Other systems that do not rely on biometrics may employ two-factor authentication. Such systems may utilize a mobile application on a user's phone. When the user seeks access to a secure system at a point of access (such as a terminal, website, VPN login, or physical access control) the access system may send a request to the mobile application to authenticate the access request. For example, a user may enter credentials into a login prompt to enable access to a corporate VPN. Prior to granting access, the system may require the user to respond, within a limited period of time, to a prompt on the user's phone acknowledging the login attempt. However, while this provides some enhanced security, the second of the two-factors used for authentication, namely the acknowledgement from the phone, only serves to demonstrate the person attempting to gain access either has the user's phone, or a device configured to spoof it.

Accordingly, there is a need for systems and methods of using biometric access controls that permit two-factor authentication. There is a further need for systems and methods configured to facilitate the use of dynamic passcodes that reduce the likelihood of spoofing a user's voice.

### SUMMARY OF THE INVENTION

The present disclosure relates to systems and methods for authenticating a user requesting access to a secure system.

The present disclosure relates to receiving a unique identifier for a system from a device in the possession of a user. The identifier may be displayed at or near an access point and may also change periodically. A unique identifier for a system includes but is not limited to a barcode, a URL, an RFID, any digital identifier, and identifiers associated with accessing a link on a webpage. Access points include but are not limited to terminals, websites, VPN logins, and physical access control points. The present disclosure additionally relates to pre-defined access points that a user has previously accessed.

The present disclosure relates to receiving a unique identifier associated with the user from the device in the possession of the user.

The present disclosure relates to verifying that the user is authorized to access the system.

The present disclosure relates to transmitting a request for authentication data to the device in the possession of the user. Authentication data includes but is not limited to biometric and behavioral data. Biometric data includes but is not limited to voice data, facial data, fingerprint data, and retinal data. Behavioral data includes but is not limited to keystroke usage patterns, mouse usage patterns, touch gesture patterns, use location patterns, usage time length patterns, and access timestamp patterns. A sample of authentication data of the kind requested in the transmitted request is then provided by the user and transmitted to a server.

Data can be collected during an on-boarding process or while a user is initially using a mobile application or device. This initial data is processed to extract certain attributes uniquely pertaining to the user. These unique attributes are compiled to create custom authentication prints for the various kinds of authentication data. On-boarding may also require a user to answer a number of selected questions. A verification process may occur after on-boarding to ensure accuracy of the custom authentication print created by on-boarding.

The present disclosure relates to examples where more than one kind of authentication data is requested.

The present disclosure relates to examples where the requested authentication data is voice data. Such examples provide a unique, randomly generated password for the user to read. The user then records themselves reading the password to provide a voice sample. The voice sample is transmitted as an audio file, waveform, mathematical representation, or the like generated based on the user's voice articulating the passcode. This sample is compared to stored attributes extracted from an earlier provided voice sample of the user. In examples where the user does not provide the requested voice data in a pre-selected time length, the access attempt is terminated.

The present disclosure relates to comparing one or more attributes of the received sample with one or more attributes of a custom authentication print for a user. A custom authentication print is stored and used as a reference to authenticate the user.

The present disclosure relates to granting or denying the user access to the system. Access is granted or denied based upon a correlation between the received sample and the custom authentication print.

The present disclosure relates to revoking user access if one or more triggering aspects of a user's use of a system are detected. System use includes use of a mobile application or device accessing the system.

The present disclosure relates to a process for preventing continued, fraudulent access to a secure system. This process continuously monitors behaviors of a user utilizing a mobile application or a device and periodically samples the behaviors. Sampled behaviors are compared to a stored custom authentication print. The process then determines a percentage match between the samples and the stored custom authentication print for the user and implements a feedback response based on whether the percentage match corresponds to a pre-selected confidence level.

Feedback responses include but are not limited to terminating the user's access or prompting the user to re-authenticate themselves if the match is below the pre-selected confidence level or taking no further action if the match is above the pre-selected confidence level.

Periodic sampling may be set to occur at any time interval desired. Such intervals include but are not limited to about once every 5 minutes up to about once every 2 hours. Samples may last any desired length of time. Samples may last from ranges including but not limited to about 2 seconds up to about 60 seconds.

Pre-selected confidence levels can be set at any desired value. Such values include but are not limited to matches of 75% and above, 80% and above, 85% and above, 90% and above, 95% and above, and 100%. Confidence levels below these ranges may also be used.

The present disclosure additionally relates to a process for averting crises while a user is accessing a secure system. The process continuously monitors behaviors of a user utilizing a mobile application or a device and periodically samples the behaviors. Sampled behaviors are compared to a stored custom authentication print. The existence of a crisis is then predicted based on the comparison and a feedback response is implemented.

A crisis is predicted if the sampled behavior appears erratic compared to the stored custom authentication print. Erratic behaviors include but are not limited to exerting more pressure on a screen or a touch pad, scrolling on a touch pad more frantically, committing more errors when using a keypad, and using less keystrokes when using the keypad.

Feedback responses for crisis prevention include but are not limited to terminating the user's access or prompting the user to re-authenticate themselves if a crisis is predicted or taking no further action if a crisis is not predicted. Re-authentication prompts include but are not limited to providing a facial recognition scan, providing a scan of the whole room in which the user is located, providing a voice recognition scan, and any combinations thereof. In some examples, if an intruder or attacker is detected during a re-authentication process, user's access to the secured system may be terminated and the authorities may be contacted.

These and other objects and advantages of the invention will become apparent from the following detailed description of the invention. Both the foregoing general description and the following detailed description are example and explanatory only and are intended to provide further explanation of the invention as claimed.

The accompanying drawings are included to provide a further understanding of the invention and are incorporated in and constitute part of this specification, as well as illustrate several examples of the invention that together with the description serve to explain the principles of the invention.

### BRIEF DESCRIPTION OF DRAWINGS

The features and components of the following figures are illustrated to emphasize the general principles of the present disclosure. Corresponding features and components throughout the figures can be designated by matching reference characters for the sake of consistency and clarity.
FIG. 1 is a schematic view of a system for utilizing biometrics for access controls.
FIG. 2 is a process flow diagram for using biometrics for access controls.

### DETAILED DESCRIPTION OF THE INVENTION

Examples of the invention will be described more fully hereinafter with reference to the accompanying drawings, in which examples of the invention are shown. This invention may, however, be embodied in many different forms and should not be construed as limited to the examples set forth herein; rather, these examples are provided so that this disclosure will be thorough and complete, and will fully convey the scope of the invention to those skilled in the art.

In the following description, numerous specific details are set forth. However, it is to be understood that examples of the invention may be practiced without these specific details. In other instances, well-known methods, structures, and techniques have been shown in detail in order not to obscure an understanding of this description.

### I. Definitions

Unless defined otherwise, all technical and scientific terms used herein have the same meaning as commonly understood by one of ordinary skill in the art to which this disclosure belongs. Any systems, components, and methods similar or equivalent to those described herein can be used in the practice or testing of the present invention. All publications mentioned are incorporated herein by reference in their entirety.

The use of the terms "a," "an," "the," and similar referents in the context of describing the presently claimed invention (especially in the context of the claims) are to be construed to cover both the singular and the plural, unless otherwise indicated herein or clearly contradicted by context.

Recitation of ranges of values herein are merely intended to serve as a shorthand method of referring individually to each separate value falling within the range, unless otherwise indicated herein, and each separate value is incorporated into the specification as if it were individually recited herein.

Use of the term "about" is intended to describe values either above or below the stated value in a range of approx. +/- 10%; in other examples the values may range in value either above or below the stated value in a range of approx. +/- 5%; in other examples the values may range in value either above or below the stated value in a range of approx. +/- 2%; in other examples the values may range in value either above or below the stated value in a range of approx. +/- 1%. The preceding ranges are intended to be made clear by context, and no further limitation is implied. All methods described herein can be performed in any suitable order unless otherwise indicated herein or otherwise clearly contradicted by context. The use of any and all examples, or example language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

For purposes of this disclosure, "lock" may refer to any such access control, such as a physical lock or logical authentication process, and an "access point" may refer to the location, either physical or virtual, where the user provides information for authentication. Access points may be doors, control panels, web portals, network workstations, laptops, or any other such location.

As used herein, "secure systems" may refer to nearly any physically or logically restricted area or computer system. These may include web portals, mobile phone applications, computer systems including work stations and networks, physical doors, electric switches and actuators, or any system with a logical or physical lock.

The present disclosure can be understood more readily by reference to the following detailed description, examples, drawings, and claims, and their previous and following description. However, before the present systems, components, and methods are disclosed and described, it is to be understood that this disclosure is not limited to the specific systems, components, and methods disclosed unless otherwise specified, as such can, of course, vary. It is also to be understood that the terminology used herein is for the purpose of describing particular aspects only and is not intended to be limiting.

### II. User Authentication Systems and Methods

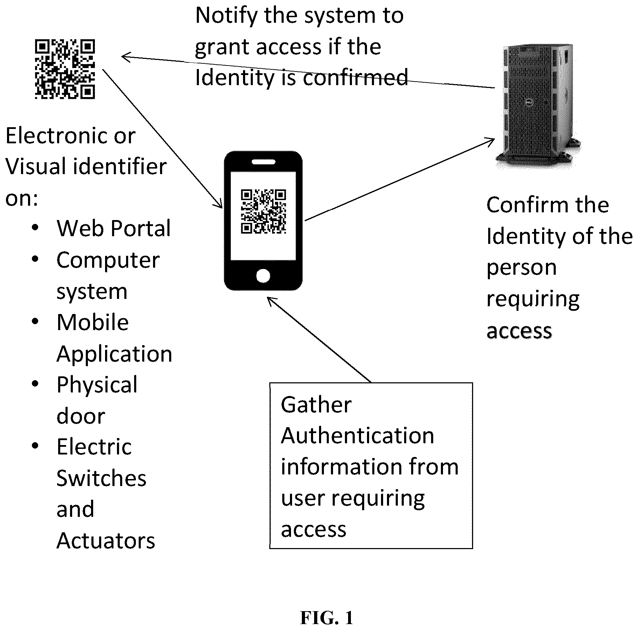

The present disclosure relates to systems and methods to provide secure access to systems without the use of a user identification (ID) and password or any user-maintained physical access control devices including keys, key fobs, software and hardware tokens, or proximity cards. The systems and methods include the use of an electronic or visual identifier, the gathering of authentication data, confirming that the user requesting access is a user properly having permission to access the system at hand, and notifying the system whether the requesting user has been granted or denied access, as shown in FIG. 1.

The present disclosure relates to systems and methods for granting access to a given space, including but not limited to physical and virtual spaces, to only users with proper permission to access the given space. Currently, a user requesting access to a specific system, may use a mobile device to authenticate themselves and gain access. Alternatively, a web based or other application could be used, and is generally included in the term "application," as it is used herein. In some examples, a user may be associated with a user designation such as a phone number, username, or other designation. The application may prompt for entry of the designation by keyed entry or spoken voice. Alternatively, the user designation may be assumed from the identity of the device, such as a mobile phone, or from the credentials used to log into the application.

The present disclosure relates to authentication systems. As a non-limiting example, an authentication system may use an electronic or visual identifier to link the secure system being accessed with the application. This may include a barcode or other designator located at a physical location or displayed at other such access point, as shown in FIG. 1. In some examples, a designator may be a static code. In other examples, a designator may be generated as a rolling code so that either physical presence at the access point or live scanning of the designator is required by a user. This assists to prevent a user from remotely unlocking an access point. As a non-limiting example, when using a mobile application, a phone's camera may be utilized to scan a designation, such as a barcode, and communicate to the authentication system to begin the process of authentication. In an additional, non-limiting example, an access point may have a numerical or other designation that may be entered into an application by a user at the access point. In other, non-limiting examples, a physical access point may have a proximity sensor, such as and RFID, Bluetooth, or other communication device that transmits or broadcasts its designation to mobile devices being used to gain access.

In some examples, an access terminal may be provided at a physical access point through which the user can interact with the authentication system to gain access. At such a terminal, a user may be prompted for a user designation which is transmitted to the authentication system with an access point designation. Once a user has requested access using an access terminal, the systems and methods disclosed herein require authentication information from the user, as shown in FIG. 1.

In additional non-limiting examples, the present disclosure relates to pre-defined access points. Pre-defined access points do not require a user to scan an identifier located at an access point as described above. Pre-defined access points allow a user who has already utilized an access point before (e.g., by previously scanning an identifier such as a barcode) to bypass the step of scanning an identifier. As a result, such a user will be able to access pre-defined access points more efficiently.

As a non-limiting example, a user may utilize a mobile application or other storage system to maintain a list of pre-defined access points to which a user has previously connected. Once the list is opened, the user can select one of the pre-defined access points without having to scan an identifier. The selection will then cause the authentication process to begin as with the above-described access point processes. A non-limiting example of a process using pre-defined access points includes but is not limited to a user turning on a device, opening a mobile application where pre-defined access points are stored, selecting a desired pre-defined access point, and proceeding with authentication according to the present disclosure. Authentication processes are further described below.

An authentication system may initially review the access controls in place to determine if the user requesting access to the mobile application has sufficient permissions to access the secure system at the time of the request and at the access point. If the associated user permissions are not sufficient, access may be denied with no further steps. Such a method streamlines denials of access.

Once the authentication system has identified the secure system to be accessed and the user associated with the access request (and in some examples verified permissions), the authentication system may then present a login prompt on the computer, phone or mobile device through the application. Since the user seeking access is already associated with the access request by means of being logged into an application, entering their designation into the application or at the access point, the authentication system need only prompt the user for authentication data. However, in some examples, it may be advantageous to also prompt the user for additional information.

The present disclosure relates to authentication steps. The systems and methods disclosed herein require authentication data. This may only be required if the initial access controls allow a user to proceed to this step of authentication. Authentication data includes but is not limited to biometric and behavioral data. Authentication data is used with biometric and behavioral recognition techniques to ensure that a user attempting to gain access to a device, service, location, and the like is a user to whom access should be granted. Moreover, the systems and methods use biometric and behavioral techniques to authenticate users. Biometric techniques include voice recognition, facial recognition, fingerprint recognition, retinal recognition, and the like. Behavioral techniques include comparing stored values of keystroke usage patterns, mouse usage patterns, touch gesture patterns (e.g., how much pressure a user normally applies to a touchpad), typical use locations, typical time lengths of usage, typical timestamps of access, and other metadata to real-time values of a current user to authenticate a person. Systems and methods for accomplishing these examples are disclosed more fully herein.

As a non-limiting example of a biometric authentication method, an application may prompt a user to speak a passphrase. To avoid spoofing by use of a prerecorded passphrase, the authentication system may randomly generate the passphrase to be spoken at the time of requested access. This prevents greatly diminishes the possibility that a pre-recorded message from an actual user can be used by an impostor to gain access to a secure system. As a non-limiting example, a passphrase may be a random sequence of numbers. The sequence is displayed with the user allowed a limited amount of time to speak the sequence into the access point device, whether it is a web app, a mobile app, or within an access terminal.

The spoken passphrase is then transmitted to the authentication system. The authentication system utilizes one or more of any suitable validation procedures to determine if the speaker of the passphrase is the user associated with reference data, i.e., the stored data. Such processes may include those disclosed in AU 2007335251, the entire disclosure of which is incorporated herein by reference.

As a non-limiting example, if the spoken passphrase is positively associated with the stored reference data, the user may be granted access to the secure system associated with the access point originally used (e.g., the QR code that was scanned). The user may also be prompted for an additional piece of authentication data such as a password or other biometric or behavioral data. If the speaker is not associated with the reference data to a sufficient confidence level, the user may be prompted to speak another passphrase for comparison, denied access, or some combination of the two. Pre-selected confidence levels, as used herein, can be set at any desired value. Such values include but are not limited to matches of 75% and above, 80% and above, 85% and above, 90% and above, 95% and above, and 100%. Confidence levels below these ranges may also be used. As a non-limiting example, a combination approach may allow a certain number of additional voice recognition attempts before denying access. Such an approach permits a user to re-attempt gaining access if they actually are the user while preventing an impostor from attempting over and over until they happen to gain access.

Systems and methods disclosed herein may also require multiple sets of data and multiple layers of user authentication. Requiring more than one data input and providing for multiple layers of authentication enhances the security of a system to which a user is requesting access. As a non-limiting example, the present disclosure relates to authentication procedures requiring voice recognition where a user records their voice repeating a random phrase, as disclosed herein, and one or more additional authentication inputs, including but not limited to a fingerprint, a retinal scan, facial recognition, and the like.

In examples described herein where a user is only requested to provide one form of authentication data including biometric and behavioral data, a user will be granted access to a secure system if the provided sample positively correlates to the stored reference sample within a pre-selected confidence level. In examples where a user is requested to provide more than one form of authentication data, a user will be granted access to a secure system if each provided sample for each form of requested authentication data positively correlates with the respective stored reference sample within a pre-selected confidence level. Confidence levels may be set at different values for different forms of authentication data, though this is not required. As an example, if a voice sample and retinal scan were requested, one or more attributes of the provided voice sample may need to match one or more attributes of a stored reference voice sample to a lesser or higher degree than for the requested retinal scan.

The present disclosure additionally relates to systems and processes for revoking user access. Revoking user access may prevent an unauthorized user from accessing a secure system once an authorized user has gained access. The ability of systems and processes to revoke user access may be enabled and disabled as desired. As a non-limiting example, it may be useful to revoke access where an authorized user leaves a secure system open while the authorized user has exited a room where a device accessing the system is located. In such an example, revoking access prevents unauthorized users from entering the room while the authorized user is absent and accessing the secure system.

Systems and processes for revoking user access include continuously monitoring one or more aspects of an authorized user's use of a device or mobile application. If one or more aspects changes in a way as to trigger a system or process, access will be revoked. As a non-limiting example, a system or process may revoke access when an authorized user walks away from a device or mobile application accessing a secure system. The system or process may accomplish this in several ways. As a non-limiting example, a system or process may monitor, e.g., through an internet protocol camera or other video-capable device, individuals leaving and entering a space. In such an example, a camera that detects a user standing up and walking away from a computer, as a non-limiting example, may revoke access to the secured system. Once revoked, a user may be prompted to repeat the authentication process described herein.

As an additional, non-limiting example, a system or process may monitor user identifiers. In such an example, a system or process may track identifiers including but not limited to facial features, heat maps, and the like to discern if an authorized user is still using the system. In such an example, access may be revoked if an authorized user's facial features or heat signatures that are tracked by the system or process cease to be detected, such as if an authorized user walks away.

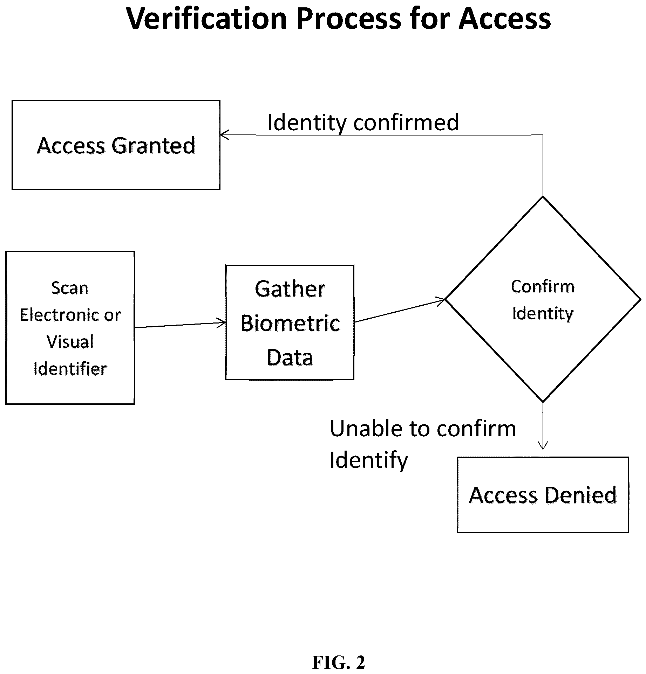

A non-limiting example of a system of authentication according to the present disclosure is provided. As shown in FIGS. 1 and 2, an example may utilize an identifier of a lock, shown as a two-dimensional barcode, such as a QR code. To gain access to a web portal, for example, a user may visit the appropriate URL in a web browser. Upon landing on the portal page, a QR code or other designator is displayed. The user may then scan the designator with their mobile device through the mobile application.

The mobile application may then communicate with the authentication system which may be housed on a central server separate from the network to which the access point is connected. The user's mobile device may then communicate the access point designator or some derivative thereof and a designation of the user logged into the mobile application. In some examples, both pieces of data could be transmitted in a single string or packet which may be tokenized. Based upon the identity of the access point and user profile, the authentication system may reference a database of permissions to determine if access may be attempted. Alternatively, the mobile application may immediately prompt the user for biometric or behavioral data, such as a generated string of numbers, letters, words, or other sounds to be spoken by the user, and transmit such data identifying the user and access point.

After determining if the user possess sufficient access privileges, the mobile application, the authentication server, or another agent, including but not limited to an actual person, may generate a string to be spoken by the user. The mobile application may then transmit the spoken string, or parts thereof as may be necessary, to a location where the spoken string uttered by the user requesting access is compared to stored reference speech data tied to the access-privileged user to ensure that both the requesting user and the actual user are the same. If validated, the authentication system may communicate to the access point, or device networked with the access point, a confirmation that would allow the user access. In an alternative, non-limiting example, the authentication system may require additional authentication data to ensure the user actually has privilege to access the secure system. This additional request may request any authentication data disclosed herein, including but not limited to additional biometric and behavioral data, such as a retinal scan, a thumb print, a sample of keystroke usage, a sample of mouse or touchpad usage, and the like. A message may also be sent to the mobile application to provide an indication of whether or not validation was successful.

The mobile application performs several functions including but not limited to an on-boarding process and a verification process.

The on-boarding process gathers the initial voice biometric sample from the user and builds a unique biometric print for that user. The on-boarding process may additionally gather other data including all authentication data disclosed herein. With respect to behavioral data, the on-boarding process may require the user to use the device for a select period of time so that the application can collect data on the user's behaviors. As a non-limiting example, the user may be requested to browse the internet for several minutes so that, as an example, a phone can determine unique behaviors associated with how the user types, how much pressure the user places on the keypad, and the like.

Additional behavioral data may be collected throughout the user's use of the application. As a non-limiting example, the present disclosure relates to logging data relating to what time of the day a user uses an application and from where a user typically accesses an application. Such data permits the systems and methods of the present disclosure to flag any abnormal activity, such as an application use from a far-away location at an odd time (e.g., a use attempt from another continent at a time a user does not normally use the device).

As previously discussed, the verification process gathers a new voice biometric sample relating to a randomly generated string, such as a random series of numbers or words, and matches that sample against the previously stored unique biometric print to confirm that the two samples belong to the same person. This in turn confirms the identity of the person.

In some examples, a mobile application or device may be used to obtain biometric data or other data required for authentication. The mobile application or device may have a built-in on-boarding process. In some examples, the mobile application or device has an open on-boarding process, where the consumer can on-board themselves. In other examples, such as a corporate application, once the user has been identified by a relevant security officer, the user is issued a token which is input into the mobile application or device to unlock the on-boarding process.

During the on-boarding process, the mobile application or device may prompt a user with a series of questions and capture one or more sets of the user's authentication data. Authentication data can include any such data disclosed herein. As a non-limiting example, authentication data includes speech samples. Once a required amount of speech is captured, the mobile application or device transmits the speech to a server to process the speech and build the user's biometric print. Speech can be processed by any known method including any known method associated with language models and machine learning. Once a biometric print is built, the server informs the mobile application or device that it should automatically run the user through a verification process to ensure the on-boarding process was successful. Such verification process may involve the user attempting to read a randomly generated prompt and then comparing this recording to the biometric print from the on-boarding process. This prevents any situations where the biometric print will not be capable of verifying the actual user moving forward. Once verified, the on-boarding process is confirmed and completed. Additional, non-limiting examples include capturing biometric data in the form of fingerprints, retinal scans, and the like.

As previously noted, authentication data may also include behavioral data. In such an example, the on-boarding process may require a user to use the application or device for a set amount of time. Data, such as keystroke, mouse usage, and touch gesture tendencies, will be collected and transmitted to a server for processing to develop behavioral prints. Once a behavioral print is built, the server informs the mobile application or device that it should automatically run the user through a verification process to ensure the on-boarding process was successful. Such verification process may involve the user attempting to use the application or device for a set period of time again and then comparing this to the behavioral print from the on-boarding process. This prevents any situations where the behavioral print will not be capable of verifying the actual user moving forward. Once verified, the on-boarding process is confirmed and completed.

When the user requires access to an access point, the user uses the mobile application or device to scan an electronic or visual designator of the access point being accessed. Once the scan is complete, the mobile application prompts the user with a series of questions and captures the user's biometric or behavioral input, such as speech. This data is then transmitted to the server for identity verification. Once the user's identity is verified, the server will notify the entity being accessed to grant access to the user.

**In** some examples, on-boarding may be accomplished by means of an automated call center. In such examples, a call center may be provided access to data to verify the identity of a caller by a user's organization. Such data may include preselected challenge questions and answers, passwords, identification numbers, etc. When calling, the user may be prompted to enter or speak a string or code which will be used to identify the sponsor organization (such as an employer) and the user. The automated call center may then progress through a validation protocol to validate the identity of the call as the user being on-boarded. In some of these examples, the process may require spoken answers during the protocol and those spoken answers may be utilized in building the user's biometric reference print.

The mobile application may allow users to pair frequently accessed access points with their profile. Once the verification process is completed, the mobile application gives the user the option to name and pair the entity with the user's profile. Such access points may be described as pre-defined access points as described herein.

Once paired, the user can select the entity being accessed from a list of paired entities (i.e., pre-defined access points), without having to scan the electronic or visual identifiers on any subsequent request for access to that specific entity. Such pairing may also assist in building additional behavioral prints for a user. As a non-limiting example, when a user pairs to a frequently accessed access point connected to a physical location, this can serve as data to analyze where a user typically uses a mobile application or device. This can then help to verify if the user requesting access is the actual user based on location of the user at the time of the request.

**In** some examples, user profiles may be agnostic to sponsor organization. This would permit individual users to create a profile which may be then granted access permissions by any sponsoring organization utilizing the system. This would be of particular benefit to service providers who provide services to multiple agencies. For example, a janitorial service contractor may need permissions for certain of its employees to access client facilities. In such instances, a user who is an employee of the janitorial service could create a profile to which the clients of the janitorial service would grant access permissions. Such a process would could also be used with access terminals at access points rather than a mobile application.

**In** some examples, a user may change his/her mobile application profile at any time. A user's mobile application profile can be loaded on to any mobile device of their choosing. This gives users the freedom to use as many mobile devices as they deem fit when using the mobile application. The user's identity is always verified before access to granted any entity to ensure that the correct person is provided access at all times.

### III. Ongoing Fraud Prevention and Crisis Aversion

The present disclosure additionally relates to methods of using systems and methods described herein to prevent ongoing fraud and to avert crises. As previously discussed, the present disclosure relates to systems and methods of collecting, processing, and monitoring behavioral data. This data includes but is not limited to keystroke usage patterns, mouse usage patterns, touch gesture patterns (e.g., how much pressure a user normally applies to a touchpad), typical use locations, typical time lengths of usage, typical timestamps of access, and other metadata. In an example where an impostor incorrectly gains access to a secure system, such as where the impostor is able to bypass other authentication systems, behavioral techniques can prevent prolonged use. Though an impostor may be capable of bypassing authentication systems required for access, they will likely not be able to perfectly imitate how an actual user utilizes the keyboard, mouse, touchpad, touchscreen, and the like.

The present disclosure relates to systems and methods of continuous monitoring of a user's behavior within a mobile application or device. The monitored behavior may be periodically sampled and compared to stored reference data for how a user normally utilizes the mobile application or device. This prevents an impostor from both gaining access and maintaining this access for indefinite periods of time, which may lead to increased economic and privacy-related damages. Once a sample of usage is extracted, it may be transmitted to a server and compared to stored reference data. If the sample does not match the stored reference data to a specified confidence level, the mobile application or device may either retract access from the user or prompt the user to re-verify their profile. Re-verification may include subjecting the user to another round of authentication, as described herein, where they may be requested to provide one or more authentication data to ensure they are properly receiving access to the secured system.

The present disclosure additionally relates to systems and methods of crisis aversion. As disclosed herein, behavioral data may be collected and stored to construct a behavioral print. In the event that a user is subjected to distress, including but not limited to during a robbery, forced access event, or any other situation where the user is being compelled to access a secure system, the user may begin to act erratically. This may be caused by the anxiety and stress of the situation at hand. Such erratic actions may also display themselves in the manner in which the user interacts with the mobile application or device. The user may begin to display behaviors that do not match with their behavioral print that is stored as a reference. As non-limiting examples, the user may begin to exert more pressure on the screen or touch pad of a mobile application or device. As additional examples, the user may scroll on a touch pad more frantically, commit more errors when using a keypad, use less keystrokes when using a keypad, or the like.

The present disclosure relates to systems and methods of preventing crises by sampling on-going behaviors of a user and periodically comparing them to stored reference data (e.g., a user's behavioral print). Periodic samples may be collected at any desired interval. As a non-limiting example, such intervals include but are not limited to about once every 5 minutes up to about once every 2 hours. Sample lengths may be set to any desired length. As a non-limiting example, samples may last from about 2 seconds up to about 60 seconds. In the event that the collected sample indicates some sort of stress-inducing influence, such as when the user displays the stress-displaying behaviors described above, the mobile application or device may either cease providing access or require the user to re-verify. Re-verification may assist or prevent the crises experienced by the user. As a non-limiting example, a crisis-induced re-verification may require the user to input authentication data in the form of a face recognition scan that may capture an image of any person forcing the user to allow them access to the secure system. Such a scan may additionally require that the user take a scan of the full room where the user is located. As an additional, non-limiting example, such re-verification may require a voice recognition process that may catch the voice of a person forcing the user to allow them access. In additional examples, a combination approach may be used to attempt to capture an image and a voice recording of an individual. Other authentication procedures may also be utilized in accordance with a crisis-induced re-verification.

Having thus described example examples of the present invention, it should be noted by those skilled in the art that the disclosures are example only and that various other alternatives, adaptations, and modifications may be made within the scope of the present invention. Accordingly, the present invention is not limited to the specific examples as illustrated herein, but is only limited by the following claims.

The application is further characterized by the following items:
1. A process for granting or denying a user access to a system using authentication data, the process comprising the steps of:
   a. receiving from a device in the possession of the user a unique identifier for the system, wherein the unique identifier for the system is displayed at or near an access point and the unique identifier for the system changes from time to time;
   b. receiving from the device in the possession of the user a unique identifier associated with the user;
   c. verifying that the user is authorized to access the system;
   d. transmitting a request for authentication data to the device in the possession of the user;
   e. receiving from the device in the possession of the user a sample of authentication data of the kind requested in the transmitted request;
   f. comparing one or more attributes of the received sample with one or more attributes of a custom authentication print for a user, wherein the custom authentication print is stored and used as a reference to authenticate the user; and
   g. granting or denying the user access to the system based upon a correlation between the one or more attributes of the received sample and the one or more expected predicted attributes of the custom authentication print.
2. The process of item 1, wherein the unique identifier for the system is received from a list of pre-defined access points, and wherein the user selects a desired pre-defined access point corresponding to the unique identifier for the system from the list of pre-defined access points.
3. The process of item 1, wherein authentication data comprises biometric and behavioral data, wherein biometric data comprises voice data, facial data, fingerprint data, and retinal data, and wherein behavioral data comprises keystroke usage patterns, mouse usage patterns, touch gesture patterns, use location patterns, usage time length patterns, and access timestamp patterns.
4. The process of item 1, wherein more than one sample of more than one kind of authentication data is requested and wherein the more than one samples are then compared to more than one custom authentication prints.
5. The process of item 1, wherein the authentication data is voice data, and wherein the user is transmitted a randomly generated passcode that the user records in a speech sample, wherein the speech sample is then compared to a custom authentication print comprising data retrieved from an earlier speech sample provided by the user, and wherein the speech sample generated on the device by the user speaking the passcode is an audio file, waveform, or mathematical representation generated based on the user's voice articulating the passcode.
6. The process of item 4, wherein the randomly generated passcode is generated after receiving the unique identifier for the system and the unique identifier for the user.
7. The process of item 4, wherein the randomly generated passcode is uniquely generated as part of a verification session.
8. The process of item 4, wherein failure to receive the speech sample generated on the device by the user speaking the randomly generated passcode within a predetermined amount of time results in the user being denied access.
9. The process of item 4, further comprising the step of prompting the user with a series of questions for the user to verbally answer and the system to record during an on-boarding process of a system mobile application on the device in the possession of the user.
10. The process of item 9, further comprising the step of building a unique biometric print for the user from the recorded verbal answers to said series of questions.
11. The process of item 10, further comprising the step of the mobile application running the user through a verification process after the unique biometric print for the user is built to ensure the on-boarding process was successful.
12. The process of item 1, wherein the system comprises a terminal, website, VPN login, or physical access control point.
13. The process of item 9, wherein the unique identifier for the system is provided in a barcode, in a URL, RFID or any digital identifier or by accessing a link on a webpage.
14. The process of item 1, wherein the custom authentication print for the user is created during an on-boarding process, wherein the user provides an initial sample of the kind of authentication data requested, and wherein the data is then processed to extract the one or more attributes from the data to create the custom authentication print.
15. The process of item 1 further comprising a step of continuously monitoring one or more aspects of the user's use of the system and revoking access to the system if the one or more aspects provide a trigger to do so.
16. A process for preventing fraudulent access to a secure system, the process comprising the steps of:
   a. continuously monitoring one or more behaviors of a user while the user is utilizing a mobile application or a device;
   b. periodically sampling the one or more behaviors of the user;
   c. comparing one or more attributes of the samples of the one or more behaviors of the user to one or more attributes of a stored custom authentication print for the user;
   d. determining a percentage match between the one or more attributes of the samples of the one or more behaviors of the user and the one or more attributes of a stored custom authentication print for the user; and
   e. implementing a feedback response based on whether the percentage match corresponds to a pre-selected confidence level.
17. The process of item 16, wherein the feedback response comprises:
   a. terminating the user's access to the secured system if the percentage match is below the pre-selected confidence level;
   b. prompting the user to re-authenticate themselves if the percentage match is below the pre-selected confidence level; or
   c. no further action if the percentage match is above the pre-selected confidence level.
18. The process of item 16, wherein the pre-selected confidence level is selected from a value of 75% and above, 80% and above, 85% and above, 90% and above, 95% and above, and 100%.
19. A process for averting crises while a user is accessing a secure system, the process comprising the steps of:
   a. continuously monitoring one or more behaviors of a user while the user is utilizing a mobile application or a device;
   b. periodically sampling the one or more behaviors of the user;
   c. comparing one or more attributes of the samples of the one or more behaviors of the user to one or more attributes of a stored custom authentication print for the user;
   d. predicting if the comparison between the one or more attributes of the samples of the one or more behaviors of the user and the one or more attributes of a stored custom authentication print for the user indicate an ongoing crisis; and
   e. implementing a feedback response based on whether an ongoing crisis is predicted.
20. The process of item 19, wherein a crisis is predicted if the sampled behavior of the user displays erratic behaviors when compared to the stored custom authentication print, wherein erratic behaviors comprise exerting more pressure on a screen or a touch pad compared to stored attributes, scrolling on a touch pad more frantically compared to stored attributes, committing more errors when using a keypad compared to stored attributes, and using less keystrokes when using the keypad compared to stored attributes.
21. The process of item 19, wherein the feedback response comprises:
   a. terminating the user's access to the secured system if a crisis is predicted;
   b. prompting the user to re-authenticate themselves if a crisis is predicted; or
   c. taking no further action if a crisis is not predicted.
22. The process of item 21, wherein the user that is prompted to re-authenticate themselves may be requested to re-authenticate themselves by providing a facial recognition scan, providing a scan of the whole room in which the user is located, providing a voice recognition scan, or a combination thereof.
23. The process of item 22, wherein the feedback response further comprises terminating the user's access to the secured system and contacting the authorities if the re-authentication indicates the user is in danger.

## Claims

1. A process for granting or denying a user access to a system using authentication data, the process comprising the steps of:
a. receiving from a device in the possession of the user a unique identifier for the system, wherein the unique identifier for the system is displayed at or near an access point and the unique identifier for the system changes from time to time;
b. receiving from the device in the possession of the user a unique identifier associated with the user;
c. verifying that the user is authorized to access the system;
d. transmitting a request for authentication data to the device in the possession of the user;
e. receiving from the device in the possession of the user a sample of authentication data of the kind requested in the transmitted request;
f. comparing one or more attributes of the received sample with one or more attributes of a custom authentication print for a user, wherein the custom authentication print is stored and used as a reference to authenticate the user; and
g. granting or denying the user access to the system based upon a correlation between the one or more attributes of the received sample and the one or more expected predicted attributes of the custom authentication print.

2. The process of claim 1, wherein the unique identifier for the system is received from a list of pre-defined access points, and wherein the user selects a desired pre-defined access point corresponding to the unique identifier for the system from the list of pre-defined access points, and/or
wherein authentication data comprises biometric and behavioral data, wherein biometric data comprises voice data, facial data, fingerprint data, and retinal data, and wherein behavioral data comprises keystroke usage patterns, mouse usage patterns, touch gesture patterns, use location patterns, usage time length patterns, and access timestamp patterns.

3. The process of claim 1, wherein more than one sample of more than one kind of authentication data is requested and wherein the more than one samples are then compared to more than one custom authentication prints.

4. The process of claim 1, wherein the authentication data is voice data, and wherein the user is transmitted a randomly generated passcode that the user records in a speech sample, wherein the speech sample is then compared to a custom authentication print comprising data retrieved from an earlier speech sample provided by the user, and wherein the speech sample generated on the device by the user speaking the passcode is an audio file, waveform, or mathematical representation generated based on the user's voice articulating the passcode.

5. The process of claim 3, wherein the randomly generated passcode is generated after receiving the unique identifier for the system and the unique identifier for the user, and/or wherein the randomly generated passcode is uniquely generated as part of a verification session, and/or,
wherein failure to receive the speech sample generated on the device by the user speaking the randomly generated passcode within a predetermined amount of time results in the user being denied access.

6. The process of claim 3, further comprising the step of prompting the user with a series of questions for the user to verbally answer and the system to record during an on-boarding process of a system mobile application on the device in the possession of the user, further optionally comprising the step of building a unique biometric print for the user from the recorded verbal answers to said series of questions,
further optionally comprising the step of the mobile application running the user through a verification process after the unique biometric print for the user is built to ensure the on-boarding process was successful.

7. The process of claim 1, wherein the system comprises a terminal, website, VPN login, or physical access control point.

8. The process of claim 6, wherein the unique identifier for the system is provided in a barcode, in a URL, RFID or any digital identifier or by accessing a link on a webpage.

9. The process of claim 1, wherein the custom authentication print for the user is created during an on-boarding process, wherein the user provides an initial sample of the kind of authentication data requested, and wherein the data is then processed to extract the one or more attributes from the data to create the custom authentication print, and/or,
further comprising a step of continuously monitoring one or more aspects of the user's use of the system and revoking access to the system if the one or more aspects provide a trigger to do so.

10. A process for preventing fraudulent access to a secure system, the process comprising the steps of:
a. continuously monitoring one or more behaviors of a user while the user is utilizing a mobile application or a device;
b. periodically sampling the one or more behaviors of the user;
c. comparing one or more attributes of the samples of the one or more behaviors of the user to one or more attributes of a stored custom authentication print for the user;
d. determining a percentage match between the one or more attributes of the samples of the one or more behaviors of the user and the one or more attributes of a stored custom authentication print for the user; and
e. implementing a feedback response based on whether the percentage match corresponds to a pre-selected confidence level.

11. The process of claim 10, wherein the feedback response comprises:
a. terminating the user's access to the secured system if the percentage match is below the pre-selected confidence level;
b. prompting the user to re-authenticate themselves if the percentage match is below the pre-selected confidence level; or
c. no further action if the percentage match is above the pre-selected confidence level.

12. The process of claim 10, wherein the pre-selected confidence level is selected from a value of 75% and above, 80% and above, 85% and above, 90% and above, 95% and above, and 100%.

13. A process for averting crises while a user is accessing a secure system, the process comprising the steps of:
a. continuously monitoring one or more behaviors of a user while the user is utilizing a mobile application or a device;
b. periodically sampling the one or more behaviors of the user;
c. comparing one or more attributes of the samples of the one or more behaviors of the user to one or more attributes of a stored custom authentication print for the user;
d. predicting if the comparison between the one or more attributes of the samples of the one or more behaviors of the user and the one or more attributes of a stored custom authentication print for the user indicate an ongoing crisis; and
e. implementing a feedback response based on whether an ongoing crisis is predicted.

14. The process of claim 13, wherein a crisis is predicted if the sampled behavior of the user displays erratic behaviors when compared to the stored custom authentication print, wherein erratic behaviors comprise exerting more pressure on a screen or a touch pad compared to stored attributes, scrolling on a touch pad more frantically compared to stored attributes, committing more errors when using a keypad compared to stored attributes, and using less keystrokes when using the keypad compared to stored attributes.

15. The process of claim 13, wherein the feedback response comprises:
a. terminating the user's access to the secured system if a crisis is predicted;
b. prompting the user to re-authenticate themselves if a crisis is predicted; or
c. taking no further action if a crisis is not predicted and/or
wherein the user that is prompted to re-authenticate themselves may be requested to re-authenticate themselves by providing a facial recognition scan, providing a scan of the whole room in which the user is located, providing a voice recognition scan, or a combination thereof,
wherein the feedback response optionally further comprises terminating the user's access to the secured system and contacting the authorities if the re-authentication indicates the user is in danger.
